(19) Europäisches Patentamt

European Patent Office

Office européen des brevets

(11) **EP 1 187 149 A1**

(12) **DEMANDE DE BREVET EUROPEEN**

(43) Date de publication:
**13.03.2002 Bulletin 2002/11**

(51) Int Cl.7: **H01F 17/00**, H01F 10/32

(21) Numéro de dépôt: **01420186.7**

(22) Date de dépôt: **05.09.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **12.09.2000 FR 0011577**

(71) Demandeur: **Memscap**
**38330 Saint Ismier (FR)**

(72) Inventeur: **Fedeli, Jean-Marc**
**38120 Saint Egreve (FR)**

(74) Mandataire: **Palix, Stéphane et al**
**Cabinet Laurent et Charras**
**20, rue Louis Chirpaz**
**B.P. 32**
**69131 Ecully Cedex (FR)**

(54) **Microcomposant du type micro-inductance ou micro-transformateur**

(57)  Microcomposant inductif (1), tel que micro-inductance ou microtransformateur, comportant un bobinage métallique (2) ayant la forme d'un solénoïde, et un noyau magnétique (4) incluant un ruban en un matériau ferromagnétique, positionné au centre du solénoïde (2), caractérisé en ce que le noyau comporte au moins un ruban supplémentaire en un matériau ferromagnétique (13), séparé de l'autre ruban (12) par une couche de séparation (14) en un matériau amagnétique dont l'épaisseur est telle que les rubans (12,13) situés de part et d'autre de la couche de séparation (14) sont couplés antiferromagnétiquement.

FIG 2

EP 1 187 149 A1

## Description

### Domaine technique

L'invention concerne le domaine de la micro-électronique, et plus précisément au secteur de la fabrication des microcomposants, notamment destinés à être utilisés dans des applications radiofréquences. Elle concerne plus précisément des microcomposants tels que des micro-inductances ou des micro-transformateurs équipés d'un noyau magnétique permettant le fonctionnement à des fréquences particulièrement élevées.

### Techniques antérieures

Comme on le sait, les circuits électroniques utilisés pour les applications radiofréquences, telles que notamment la téléphonie mobile, comportent des circuits oscillants incluant des capacités et inductances.

Compte tenu de la tendance à la miniaturisation, il est impératif que les microcomposants tels que les micro-inductances occupent un volume de plus en plus réduit, tout en conservant une valeur d'inductance suffisante et un coefficient de qualité élevé.

Par ailleurs, la tendance générale est à l'augmentation des fréquences de fonctionnement. Ainsi, on peut citer à titre d'exemple les fréquences utilisées dans les nouvelles normes UMTS de la téléphonie mobile, qui sont au voisinage de 2,4 GigaHertz, par comparaison avec les fréquences de 900 et 1800 MegaHertz utilisées pour la norme GSM.

L'augmentation des fréquences de fonctionnement pose des problèmes relatifs au comportement des noyaux magnétiques des micro-inductances.

En effet, pour obtenir un bon facteur de qualité, on recherche généralement à augmenter la valeur d'inductance de la micro-inductance. A cet effet, on choisit des matériaux magnétiques dont la géométrie et les dimensions permettent d'avoir une perméabilité la plus importante possible.

Or, compte tenu des phénomènes de gyromagnétisme, il est connu que la perméabilité varie en fonction de la fréquence, et plus précisément qu'il existe une fréquence de résonance au-delà de laquelle une inductance présente un comportement capacitif. Autrement dit, une micro-inductance doit impérativement être utilisée à des fréquences inférieures à cette fréquence de résonance.

Or, l'augmentation des fréquences d'utilisation se heurte donc au phénomène de résonance gyromagnétique, qui limite pour une géométrie donnée la plage de fréquence dans laquelle l'inductance peut être utilisée de façon optimale.

Un problème que se propose de résoudre l'invention est celui de la limitation de la fréquence d'utilisation inhérente à l'existence d'un phénomène de gyromagnétisme.

### Exposé de l'invention

L'invention concerne donc un microcomposant inductif tel qu'une micro-inductance ou un micro-transformateur, qui comporte un bobinage métallique ayant la forme d'un solénoïde, et un noyau magnétique incluant un ruban en un matériau ferromagnétique positionné au centre du solénoïde.

Ce microcomposant se caractérise en ce que le noyau comporte au moins un ruban supplémentaire en un matériau ferromagnétique, séparé de l'autre ruban par une couche de séparation en un matériau amagnétique, dont l'épaisseur est telle que les rubans situés de part et d'autre de la couche de séparation sont couplés antiferromagnétiquement.

Autrement dit, les deux rubans ferromagnétiques du noyau agissent l'un sur l'autre au travers de la couche de séparation de telle sorte que les aimantations de chacun de ces rubans sont orientées dans la même direction, mais dans des sens opposés les unes par rapport aux autres. Ce couplage antiferromagnétique s'oppose donc à la rotation des aimantations lorsqu'un champ extérieur est appliqué. Cette résistance à la rotation des aimantations, se traduit par une diminution de la perméabilité intrinsèque du matériau ferromagnétique pris isolément. En effet, lorsque l'aimantation d'un domaine magnétique de l'un des rubans est soumis à un champ magnétique à l'extérieur, l'aimantation du domaine en regard sur l'autre ruban interagit en limitant la rotation de la première aimantation.

La diminution de la perméabilité magnétique de chaque ruban se traduit par une diminution de la valeur d'inductance des microcomposants. On a constaté que cet inconvénient était compensé par l'augmentation de la fréquence de résonance gyromagnétique, correspondant à la fréquence maximale à laquelle le microcomposant conserve son comportement inductif.

Comme on le sait, la perméabilité magnétique est une grandeur complexe, dans laquelle la partie réelle représente la perméabilité efficace($\mu'$), tandis que la partie imaginaire ($\mu''$) représente les pertes. La fréquence de résonance gyromagnétique est donnée par l'expression suivante :

$$f_{res} = \frac{\gamma}{2\pi}\sqrt{(H_k + N.4\pi M_s)(H_k + 4.\pi M_s)}$$

dans laquelle :

- N est le coefficient de champ démagnétisant,
- $\gamma$ est la constante gyromagnétique,
- $H_k$ est la valeur du champ d'anisotropie,
- et $M_s$ est la valeur du moment magnétique à la saturation.

On constate donc que la fréquence de résonance est une fonction croissante de la valeur du champ d'anisotropie qui oriente les domaines magnétiques selon l'axe facile.

Ainsi, la présence du second ruban est assimilable à l'augmentation de la valeur du champ d'anisotropie qui caractérise la difficulté à imposer une rotation aux différentes aimantations. L'augmentation de ce champ d'anisotropie implique donc par la formule ci-avant une augmentation de la fréquence de résonance. Il est donc possible d'utiliser la micro-inductance ou le micro-transformateur conforme à l'invention à des fréquences plus élevées que pour les composants existants.

En pratique, le noyau magnétique peut être constitué de l'empilement d'une pluralité de rubans ferromagnétiques séparés par des couches de séparation amagnétiques, les rubans situés de part et d'autre de chaque couche de séparation étant couplés antiferromagnétiquement.

En effet, pour obtenir le phénomène de couplage antiferromagnétique, la couche de séparation doit être particulièrement mince, de l'ordre du nanomètre, ce qui nécessite un empilement supérieur à une dizaine de couches ferromagnétiques pour obtenir des valeurs d'inductance suffisantes.

En pratique, chaque ruban ferromagnétique possède un axe d'aimantation facile qui est préférentiellement orienté perpendiculairement à l'axe du solénoïde. On obtient une telle orientation en exerçant un champ magnétique perpendiculaire à l'axe du solénoïde, lors du dépôt de la matière constituant les rubans ferromagnétiques.

En pratique, la couche de séparation peut être soit un matériau conducteur, soit encore un matériau isolant. Parmi les conducteurs préférés, on choisira notamment le cuivre, l'or, l'argent, le chrome et les alliages métalliques à partir de ces métaux. En ce qui concerne les matériaux isolants destinés à former les couches de séparation, la silice, l'alumine et le nitrure de silicium peuvent par exemple être utilisés.

Les matériaux ferromagnétiques utilisés peuvent être notamment du cobalt, du fer, du nickel-fer ou du cobalt-fer.

**Description sommaire des figures**

La manière de réaliser l'invention ainsi que les avantages qui en découlent ressortiront bien de la description des modes de réalisation qui suivent à l'appui des figures annexées, dans lesquelles :

- la figure 1 est une vue de dessus schématique d'une micro-inductance réalisée conformément à l'invention ;
- la figure 2 est une vue en coupe longitudinale selon le plan II-II' de la figure 1 ;
- la figure 3 est une vue en coupe transversale selon le plan III-III' de la figure 1 ;
- les figures 4 et 5 sont des schémas explicatifs de l'orientation des aimantations des domaines magnétiques ;
- la figure 6 est un diagramme illustrant la variation du couplage ferromagnétique en fonction de l'épaisseur de la couche de séparation.
- la figure 7 est un diagramme schématique illustrant la variation de l'aimantation en fonction du champ extérieur appliqué, pour des matériaux antiferromagnétique et ferromagnétique.

**Manière de réaliser l'invention**

Comme déjà indiqué, l'invention concerne des microcomposants tels que des micro-inductances ou micro-transformateurs, dont le noyau magnétique comprend plusieurs rubans en matériaux ferromagnétiques séparés par des couches de séparation amagnétique, dont l'épaisseur est déterminée pour que les rubans ferromagnétiques adjacents soient couplés antiferromagnétiquement.

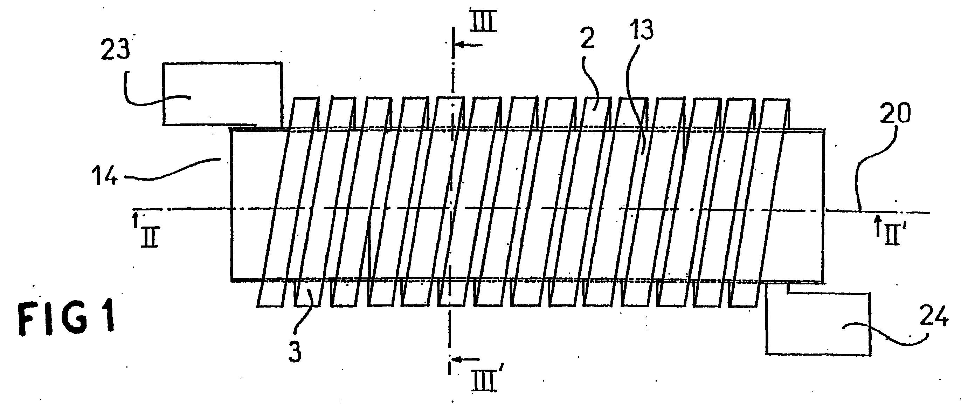

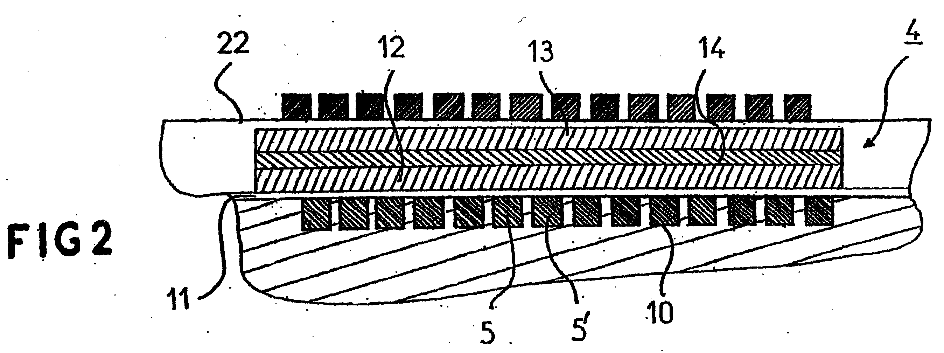

Ainsi, comme l'illustrent les figures 1 et 2, les micro-inductances (1) conformes à l'invention comportent un bobinage métallique (2) constitué d'une pluralité de spires (3) enroulées autour du noyau magnétique. Plus précisément, chaque spire (3) du solénoïde comprend une partie basse (5) qui est insérée dans la surface du substrat (6), ainsi qu'une pluralité d'arches (7) reliant les extrémités (8;9) des parties basses adjacentes (5,5').

Pour obtenir une telle inductance, on procède à la gravure d'une pluralité de canaux parallèles (10) sur la face supérieure d'un substrat isolant ou une couche isolante sur un substrat conducteur ou semi-conducteur (6). On obtient les parties basses (5) de chaque spire par croissance électrolytique de cuivre, puis on planarise la surface du substrat (6) pour obtenir un état de surface optimal. On effectue ensuite le dépôt d'une couche de silice (11) au dessus de la face supérieure du substrat (6), de manière à isoler les parties basses (5) des spires vis-à-vis des matériaux utilisés pour le noyau magnétique.

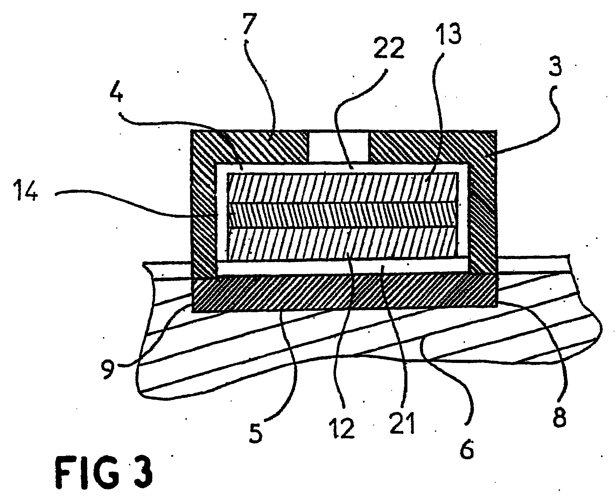

On réalise ensuite le noyau magnétique (4). Comme déjà dit, le noyau magnétique (4) peut comporter un grand nombre de rubans ferromagnétiques empilés et, l'invention n'est pas limitée à la forme de réalisation illustrée dans les dessins, pour lesquels le nombre de rubans ferromagnétiques est peu élevé pour faciliter la représentation. Ainsi, le noyau (4) de la figure 3 comporte deux rubans ferromagnétiques (12,14) entre lesquels est située la couche de séparation (13).

Plus précisément, pour réaliser la couche (12) en matériau ferromagnétique, on choisit la technique de pulvérisation cathodique, qui permet d'obtenir des épaisseurs contrôlées.

L'épaisseur de chaque ruban ferromagnétique est choisie entre 1 et 10 nanomètres. Le nombre de rubans ferromagnétiques est choisi pour obtenir une inductance suffisante.

Comme déjà dit, pour assurer une anisotropie dans le ruban ferromagnétique (12), on procède au dépôt par pulvérisation cathodique en soumettant la région d'application à un champ magnétique orienté parallèlement au plan du substrat, et perpendiculairement à l'axe du solénoïde.

Par la suite, on procède au dépôt d'une couche (14) de séparation amagnétique, qui peut être métallique ou bien encore isolante. Ce dépôt est effectué par pulvérisation cathodique d'un métal conducteur tel que le cuivre, l'argent, l'or ou le chrome.

Par la suite, on procède au dépôt d'un second ruban ferromagnétique (13) au dessus de la couche de séparation. Bien que cela ne corresponde pas à la représentation de la figure 2, on peut renouveler ensuite les opérations de dépôt de la couche de séparation, puis d'un ruban ferromagnétique supplémentaire autant de fois que nécessaire pour réaliser le noyau magnétique (4).

Après avoir réalisé l'ensemble du noyau magnétique (4), on procède au dépôt d'une couche de silice (22) destinée à isoler électriquement le noyau magnétique (4) de la partie supérieure (7) des spires (2). Par la suite, on procède à un dépôt électrolytique de cuivre pour former des arches (7) reliant l'extrémité opposée des parties basses adjacentes (5,5'), pour obtenir le microcomposant illustré à la figure 1.

Des étapes ultérieures pour la création de plots de connexion, ainsi qu'une éventuelle passivation peuvent être effectuées.

Le choix des matériaux utilisés pour les rubans ferromagnétiques (12,13) et la couche de séparation (14), ainsi que l'épaisseur de cette dernière, sont déterminants pour obtenir le phénomène de couplage antiferromagnétique entre les rubans ferromagnétiques.

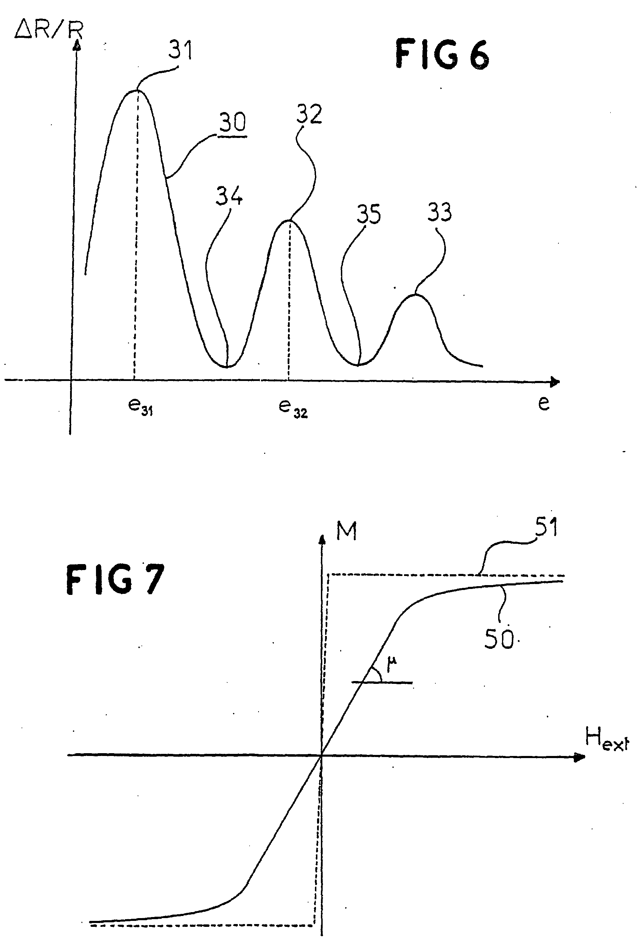

On a représenté à la figure 6 une courbe typique (30) illustrant l'évolution du couplage magnétique entre les rubans ferromagnétiques en fonction de l'épaisseur (e) de la couche séparatrice (14). Pour illustrer la variation du couplage magnétique, on fait appel à des mesures réalisées dans le cadre du développement sur les magnéto-résistances géantes. En effet, on sait que dans un ensemble formé de couches ferromagnétiques séparées par une couche de séparation amagnétique, on observe une diminution importante de la résistivité lors de l'application d'un champ magnétique. Lorsqu'un champ magnétique est appliqué à une telle structure, les aimantations des couches ferromagnétiques tournent progressivement en direction du champ appliqué et s'alignent toutes parallèlement à celui-ci lorsqu'il devient supérieur au champ de saturation. Ce changement d'orientation relatif des aimantations dans les couches ferromagnétiques successives s'accompagne d'une diminution très importante de la résistance électrique de l'ensemble. La résistance est plus faible lorsque les aimantations sont parallèles que lorsqu'elles sont antiparallèles. L'amplitude de la magnéto-résistance correspond à la variation de la résistivité lorsque le champ appliqué a une valeur nulle et la valeur de saturation.

On a représenté à la figure 6 la variation de cette amplitude de magnéto-résistance en fonction de l'épaisseur (e) de la couche de séparation. On constate une variation de l'amplitude de magnéto-résistance qui présente des maxima (31-33) correspondant à des configurations dans lesquelles les couches ferromagnétiques sont couplées antiferromagnétiquement, alors que les minima (34,35) correspondent à des situations de couplage ferromagnétique.

Autrement dit, dans les noyaux conformes à l'invention, on choisit l'épaisseur de la couche de séparation correspondant à un pic (31,32,33) sur la courbe de la figure 6, c'est-à-dire à une configuration de couplage antiferromagnétique.

Si comme dans le cas de la figure 6 correspondant au choix du cobalt comme couche ferromagnétique et du cuivre comme couche de séparation, il existe plusieurs pics (31,32) de magnéto-résistance, on choisira l'épaisseur de la couche de séparation en fonction de l'application choisie. En effet, le couplage antiferromagnétique étant plus fort pour l'épaisseur ($e_{31}$) la plus faible, on observe au niveau du premier pic (31) une perméabilité magnétique du noyau plus faible que pour le second pic (32), mais en contrepartie, une fréquence de résonance pour l'effet gyromagnétique plus élevée. Le choix de l'épaisseur ($e_{31}$, $e_{32}$) se fera donc en fonction du type d'inductance ou de micro-transformateur souhaité.

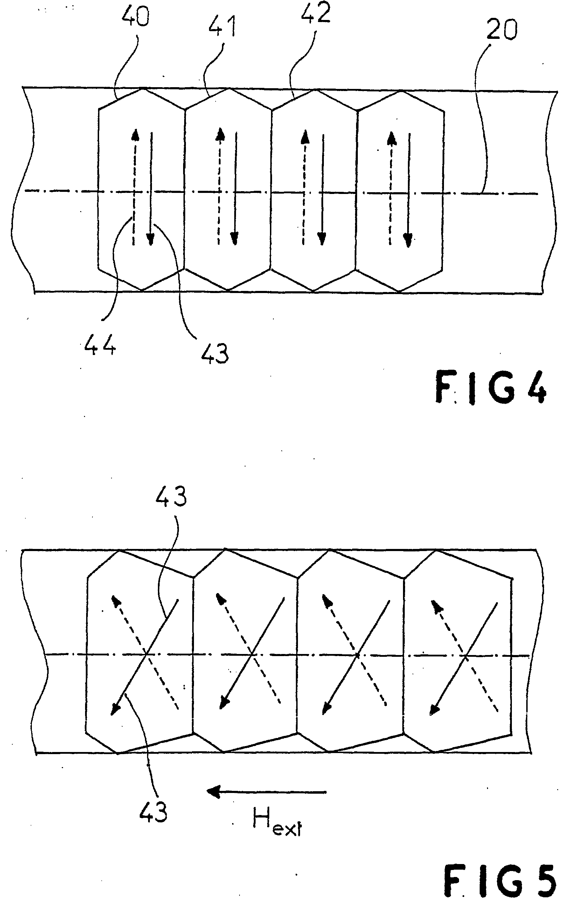

Le couplage antiferromagnétique existant entre deux rubans ferromagnétiques adjacents est illustré aux figures 4 et 5. Ainsi, dans le ruban supérieur, les domaines magnétiques (40-42) ont la forme approximative illustrée à la figure 4. On observe que l'aimantation illustrée par une flèche (43) en trait gras est orientée perpendiculairement à l'axe (20) du solénoïde, correspondant à la grande dimension du ruban. Le couplage antiferromagnétique se matérialise par l'orientation antiparallèle de l'aimantation des domaines magnétiques du ruban inférieur. Cette aimantation est illustrée par une flèche (44) en traits pointillés de sens opposé à l'aimantation (43) du ruban supérieur.

Lorsqu'un champ magnétique Hext est exercé parallèlement à l'axe du solénoïde, les aimantations (43,44) ont tendance à s'orienter en direction de ce champ extérieur Hext, comme illustré à la figure 5.

Les domaines magnétiques se déforment concomitamment sur les deux rubans. L'influence des aimantations d'un ruban sur l'autre (correspondant au couplage antiferromagnétique) produit une variation de l'aimantation globale M en fonction du champ Hext appliqué représenté par la courbe en trait plein de la figure 7. Cette courbe présente une pente, image de la perméabilité ($\mu$), qui est plus faible que celle de la courbe (51) illustrée en pointillés correspondant à un matériau ferromagnétique pour lequel la saturation est atteinte pour des champs excitateurs nettement inférieurs.

Bien que l'invention soit décrite plus en détail en ce qui concerne la micro-inductance, il va de soi que la réalisation de micro-transformateurs, avec plusieurs bobinages enroulés sur noyau commun, est également couverte par l'invention.

Il ressort de ce qui précède que les microcomposants conformes à l'invention présentent de multiples avantages, et notamment l'augmentation de la fréquence maximale de fonctionnement par rapport à des microcomposants de dimensions et de matériaux identiques.

Ces microcomposants trouvent une application toute particulière dans l'application de radio-fréquence, et notamment dans la radio-téléphonie mobile.

**Revendications**

1. Microcomposant inductif (1), tel que micro-inductance ou microtransformateur, comportant un bobinage métallique (2) ayant la forme d'un solénoïde, et un noyau magnétique (4) incluant un ruban (12) en un matériau ferromagnétique, positionné au centre du solénoïde (2), **caractérisé en ce que** le noyau comporte au moins un ruban supplémentaire (13) en un matériau ferromagnétique, séparé de l'autre ruban par une couche de séparation (14) en un matériau amagnétique dont l'épaisseur est telle que les rubans (12,13) situés de part et d'autre de la couche de séparation (14) sont couplés antiferromagnétiquement.

2. Microcomposant selon la revendication 1, **caractérisé en ce que** le noyau comporte une pluralité de rubans ferromagnétiques (12,13) séparés par des couches de séparation (14) amagnétiques, les rubans (12,13) situés de part et d'autre de chaque couche de séparation (14) étant couplés antiferromagnétiquement.

3. Microcomposant selon la revendication 1, **caractérisé en ce que** chaque ruban (12,13) possède un axe d'aimantation facile perpendiculaire à l'axe (20) du solénoïde.

4. Microcomposant selon la revendication 1, **caractérisé en ce que** au moins une couche de séparation (14) est en un matériau conducteur.

5. Microcomposant selon la revendication 4, **caractérisé en ce que** le matériau de la couche de séparation (14) est choisi dans le groupe comprenant le cuivre, l'or, l'argent, le chrome et les alliages métalliques à base de ces métaux.

6. Microcomposant selon la revendication 1, **caractérisé en ce que** au moins une couche de séparation (14) est en un matériau isolant.

FIG 1

EP 1 187 149 A1

FIG 2

**FIG 3**

FIG 4

FIG 5

$\Delta R/R$

**FIG 6**

31

30

32

34

35

33

$e_{31}$

$e_{32}$

$e$

**FIG 7**

M

51

50

$\mu$

$H_{ext}$

## Office européen des brevets — RAPPORT DE RECHERCHE EUROPEENNE

Numéro de la demande

EP 01 42 0186

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | ANTONOV A S ET AL: "THE HIGH-FREQUENCY MAGNETO-IMPEDANCE OF A SANDWICH WITH TRANSVERSE MAGNETIC ANISOTROPY" JOURNAL OF PHYSICS D. APPLIED PHYSICS,IOP PUBLISHING, BRISTOL,GB, vol. 32, no. 11, 7 juin 1999 (1999-06-07), pages 1204-1208, XP000919673 ISSN: 0022-3727 * abrégé * * page 2, colonne de gauche * * page 5, colonne de droite; figure 1 * | 1,4,5 | H01F17/00 H01F10/32 |
| Y | EP 0 725 407 A (IBM) 7 août 1996 (1996-08-07) * abrégé * | 1,4,5 | |
| A | US 6 104 275 A (MAEDA ATSUSHI) 15 août 2000 (2000-08-15) * colonne 7, ligne 63 - colonne 8, ligne 9; figure 7 * | 2 | |
| A | MIYAZAKI T ET AL: "SPIN TUNNELING IN NI-FE/AL2O3/CO JUNCTION DEVICES (INVITED)" JOURNAL OF APPLIED PHYSICS,US,AMERICAN INSTITUTE OF PHYSICS. NEW YORK, vol. 81, no. 8, PART 02A, 15 avril 1997 (1997-04-15), pages 3753-3757, XP000702682 ISSN: 0021-8979 * abrégé * | 6 | DOMAINES TECHNIQUES RECHERCHES (Int.Cl.7) H01F |

Le présent rapport a été établi pour toutes les revendications

| Lieu de la recherche | Date d'achèvement de la recherche | Examinateur |
|---|---|---|
| LA HAYE | 5 décembre 2001 | Marti Almeda, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 01 42 0186

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

05-12-2001

| Document brevet cité au rapport de recherche | | Date de publication | Membre(s) de la famille de brevet(s) | | Date de publication |
|---|---|---|---|---|---|
| EP 0725407 | A | 07-08-1996 | EP | 0725407 A1 | 07-08-1996 |
|  |  |  | JP | 8250332 A | 27-09-1996 |
| US 6104275 | A | 15-08-2000 | JP | 10098220 A | 14-04-1998 |
|  |  |  | WO | 9812758 A1 | 26-03-1998 |

EPO FORM P0460

Pour tout renseignement concernant cette annexe : voir Journal Officiel de l'Office européen des brevets, No. 12/82